# EUROPEAN PATENT SPECIFICATION

(11) **EP 3 049 685 B1**
(45) Date of publication and mention of the grant of the patent: **30.10.2019**
(21) Application number: 14847768.0
(22) Date of filing: 22.09.2014
(51) Int. Cl.: F16D 27/02, F16D 11/00, F16D 27/10, F16D 41/12, F16D 41/16

(54) **APPARATUS FOR CONTROLLING OPERATING MODES OF A COUPLING ASSEMBLY, AND ELECTRIC MOTOR DISCONNECT AND PASS THROUGH ASSEMBLIES**
VORRICHTUNG ZUR STEUERUNG VON BETRIEBSMODI EINER KUPPLUNGSANORDNUNG SOWIE ELEKTROMOTORABSCHALT- UND -DURCHGANGSANORDNUNGEN
APPAREIL DE COMMANDE DES MODES DE FONCTIONNEMENT D'UN ENSEMBLE D'EMBRAYAGE, ET ENSEMBLES DE DÉCONNEXION ET D'INTERCOMMUNICATION D'UN MOTEUR ÉLECTRIQUE

(30) Priority: 26.09.2013 US 201361882694 P
(43) Date of publication of application: 03.08.2016
(73) Proprietor: Means Industries, Inc., Saginaw, MI 48601-2893 (US)
(72) Inventor: KIMES, John W., Wayne, Michigan 48184 (US); MCCLEER, Patrick J., Jackson, Michigan 49203 (US); HENDRICK, Terry O., Cass City, MI 48726 (US)
(74) Representative: Miller, James Lionel Woolverton
(86) International application number: PCT/US2014/056716
(87) International publication number: WO 2015/047925

(56) References cited:
- WO-A1-2012/112550
- KR-A- 20140 009 342
- US-A- 2 863 326
- US-A- 5 046 594
- US-A1- 2001 049 306
- US-A1- 2011 011 694
- US-A1- 2012 145 505

## Description

### TECHNICAL FIELD

This invention relates to devices and apparatus to control the operating mode of coupling apparatus such as controllable one-way clutches (OWCs), coupling and control assemblies and electric motor disconnect and pass through assemblies.

### OVERVIEW

A typical one-way clutch (OWC) consists of an inner ring, an outer ring and a locking device between the two rings. The one-way clutch is designed to lock in one direction and to allow free rotation in the other direction. Two types of one-way clutches often used in vehicular, automatic transmissions include:
- Roller type which consists of spring loaded rollers between the inner and outer race of the one-way clutch. (Roller type is also used without springs on some applications); and
- Sprag type which consists of asymmetrically shaped wedges located between the inner and outer race of the one-way clutch.

The one-way clutches are typically used in the transmission to prevent an interruption of drive torque (*i*.*e*., power flow) during certain gear shifts and to allow engine braking during coasting.

Controllable or selectable one-way clutches (*i*.*e*., OWCs) are a departure from traditional one-way clutch designs. Selectable OWCs add a second set of locking members in combination with a slide plate. The additional set of locking members plus the slide plate adds multiple functions to the OWC. Depending on the needs of the design, controllable OWCs are capable of producing a mechanical connection between rotating or stationary shafts in one or both directions. Also, depending on the design, OWCs are capable of overrunning in one or both directions. A controllable OWC contains an externally controlled selection or control mechanism. Movement of this selection mechanism can be between two or more positions which correspond to different operating modes.

U.S. Patent No. 5,927,455 discloses a bi-directional overrunning pawl-type clutch, U.S. Patent No. 6,244,965 discloses a planar overrunning coupling, and U.S. Patent No. 6,290,044 discloses a selectable one-way clutch assembly for use in an automatic transmission.

U.S. Patent Nos. 7,258,214 and 7,344,010 disclose overrunning coupling assemblies, and U.S. Patent No. 7,484,605 discloses an overrunning radial coupling assembly or clutch.

A properly designed controllable OWC can have near-zero parasitic losses in the "off' state. It can also be activated by electro-mechanics and does not have either the complexity or parasitic losses of a hydraulic pump and valves.

Other related U.S. patent publications include: 2011/0140451; 2011/0215575; 2011/0233026; 2011/0177900; 2010/0044141; 2010/0071497; 2010/0119389; 2010/0252384; 2009/0133981; 2009/0127059; 2009/0084653; 2009/0194381; 2009/0142207; 2009/0255773; 2009/0098968; 2010/0230226; 2010/0200358; 2009/0211863; 2009/0159391; 2009/0098970; 2008/0223681; 2008/0110715; 2008/0169166; 2008/0169165; 2008/0185253; 2007/0278061; 2007/0056825; 2006/0138777; 2006/0185957; 2004/0110594; and the following U.S. patents: 7,942,781; 7,806,795; 7,690,455; 7,491,151; 7,484,605; 7,464,801; 7,349,010; 7,275,628; 7,256,510; 7,223,198; 7,198,587; 7,093,512; 6,953,409; 6,846,257; 6,814,201; 6,503,167; 6,193,038; 4,050,560; 4,340,133; 5,597,057; 5,918,715; 5,638,929; 5,362,293; 5,678,668; 5,070,978; 5,052,534; 5,387,854; 5,231,265; 5,394,321; 5,206,573; 5,453,598; 5,642,009; 6,075,302; 6,065,576; 6,982,502; 7,153,228; 5,924,510; and 5,918,715.

A linear motor is an electric motor that has had its stator and rotor "unrolled" so that instead of producing a torque (rotation) it produces a linear force along its length. The most common mode of operation is as a Lorentz-type actuator, in which the applied force is linearly proportional to the current and the magnetic field. U.S. published application 2003/0102196 discloses a bi-directional linear motor.

Mechanical forces that are due to local or distant magnetic sources, i.e. electric currents and/or permanent magnet (PM) materials, can be determined by examination of the magnetic fields produced or "excited" by the magnetic sources. A magnetic field is a vector field indicating at any point in space the magnitude and direction of the influential capability of the local or remote magnetic sources. The strength or magnitude of the magnetic field at a point within any region of interest is dependent on the strength, the amount and the relative location of the exciting magnetic sources and the magnetic properties of the various mediums between the locations of the exciting sources and the given region of interest. By magnetic properties one means material characteristics that determine "how easy" it is to, or "how low" a level of excitation is required to, "magnetize" a unit volume of the material, that is, to establish a certain level of magnetic field strength. In general, regions which contain iron material are much easier to "magnetize" in comparison to regions which contain air or plastic material.

Magnetic fields can be represented or described as three dimensional lines of force, which are closed curves that traverse throughout regions of space and within material structures. When magnetic "action" (production of measurable levels of mechanical force) takes place within a magnetic structure these lines of force are seen to couple or link the magnetic sources within the structure. Lines of magnetic force are coupled/linked to a current source if they encircle all or a portion of the current path in the structure. Force lines are coupled/linked to a PM source if they traverse the PM material, generally in the direction or the anti-direction of the permanent magnetization. Individual lines of force or field lines, which do not cross one another, exhibit levels of tensile stress at every point along the line extent, much like the tensile force in a stretched "rubber band," stretched into the shape of the closed field line curve. This is the primary method of force production across air gaps in a magnetic machine structure.

One can generally determine the direction of net force production in portions of a magnetic machine by examining plots of magnetic field lines within the structure. The more field lines (i.e. the more stretched rubber bands) in any one direction across an air gap separating machine elements, the more "pulling" force between machine elements in that given direction.

Metal injection molding (MIM) is a metalworking process where finely-powdered metal is mixed with a measured amount of binder material to comprise a 'feedstock' capable of being handled by plastic processing equipment through a process known as injection mold forming. The molding process allows complex parts to be shaped in a single operation and in high volume. End products are commonly component items used in various industries and applications. The nature of MIM feedstock flow is defined by a physics called rheology. Current equipment capability requires processing to stay limited to products that can be molded using typical volumes of 100 grams or less per "shot" into the mold. Rheology does allow this "shot" to be distributed into multiple cavities, thus becoming cost-effective for small, intricate, high-volume products which would otherwise be quite expensive to produce by alternate or classic methods. The variety of metals capable of implementation within MIM feedstock are referred to as powder metallurgy, and these contain the same alloying constituents found in industry standards for common and exotic metal applications. Subsequent conditioning operations are performed on the molded shape, where the binder material is removed and the metal particles are coalesced into the desired state for the metal alloy.

A clevis fastener is a three piece fastener system consisting of a clevis, clevis pin, and tang. The clevis is a U-shaped piece that has holes at the end of the prongs to accept the clevis pin. The clevis pin is similar to a bolt, but is only partially threaded or unthreaded with a cross-hole for a cotter pin. The tang is the piece that fits between the clevis and is held in place by the clevis pin. The combination of a simple clevis fitted with a pin is commonly called a shackle, although a clevis and pin is only one of the many forms a shackle may take.

Clevises are used in a wide variety of fasteners used in the farming equipment, sailboat rigging, as well as the automotive, aircraft and construction industries. They are also widely used to attach control surfaces and other accessories to servos in model aircraft. As a part of a fastener, a clevis provides a method of allowing rotation in some axes while restricting rotation in others.

For purposes of this application, the term "coupling" should be interpreted to include clutches or brakes wherein one of the plates is drivably connected to a torque delivery element of a transmission and the other plate is drivably connected to another torque delivery element or is anchored and held stationary with respect to a transmission housing. The terms "coupling," "clutch" and "brake" may be used interchangeably.

### SUMMARY OF EXAMPLE EMBODIMENTS

A switchable linear, actuator device to control the operating mode of a coupling assembly is provided. The device has a plurality of magnetic sources which produce corresponding magnetic fields to create a net translational force. The device includes a stator structure having at least one electromagnetic source and a translator structure including a permanent magnet source magnetically coupled to the stator structure across a radial air gap. The translation structure is supported for translational movement relative to the stator structure along an axis between first and second stable axial end positions which correspond to first and second operating modes of the coupling assembly, characterised in that the permanent magnet source has an unstable axial equilibrium position between the end positions. The translator structure translates along the axis between the different positions upon experiencing the net translational force comprising a first translational force caused by energization of the at least one electromagnetic source and a latching force based upon linear position of the permanent magnet source along the axis.

The structures may be substantially circularly symmetric.

The permanent magnet source may comprise an annular magnet.

The annular magnetic may be a rare earth magnet.

The annular magnet may be axially magnetized.

The translator structure may include a pair of field redirection rings wherein the annular magnet is sandwiched between the field redirection rings. Each electromagnetic source may include an annular slot and a coil disposed in the slot. Each slot may open to the radial air gap.

Each electromagnet source may include an annular slot and a coil disposed in the slot, each slot opening to the radial air gap.

The permanent magnetic source may have a permanent magnetic field and the at least one magnetic source may include a coil and wherein coil energization creates a temporary magnetic field which causes the translator structure to translate along the axis and wherein the permanent magnetic field causes the translator structure to maintain at least one of the end positions without the need to maintain coil energization thereby providing a latching effect.

### BRIEF DESCRIPTION OF THE DRAWINGS

Figure 1 is a perspective view, of an example that is not part of the invention partially broken away and in cross-section, of an electromechanical assembly including a reciprocating rod and a first subassembly of a controllable coupling assembly wherein the reciprocating rod of the electromechanical assembly controls the operating mode of the coupling assembly;
Figure 2 is a different perspective view, partially broken away and in cross-section, of the assemblies of Figure 1;
Figure 3 is an enlarged front view, partially broken away and in cross-section, of the assemblies of Figures 1 and 2;
Figure 4 is an enlarged front view, partially broken away and in cross-section, of the assemblies of Figures 1 and 2 but showing a second reciprocating rod to control the operating mode of the coupling assembly;
Figure 5 is an exploded perspective view showing the first subassembly of the coupling assembly, first and second sets of rods of the electromechanical assembly and corresponding forward and reverse struts;
Figure 6 is an exploded perspective view showing a second subassembly of the coupling assembly, third and fourth sets of rods of a second electromechanical assembly and corresponding forward and reverse struts;
Figure 7 is a bottom perspective view of a clevis-shaped strut (either forward or reverse) and interconnected rod, partially broken away;
Figure 8 is a top perspective view of the strut of Figure 7;
Figures 9a-9f are schematic diagrams illustrating various unitized dynamic linear motor concept of at least one embodiment of the present invention;
Figures 10a, 10b and 10c are schematic sectional views illustrating various static linear motor concepts constructed in accordance with at least one embodiment of the present invention;
Figure 11 is a schematic diagram illustrating an e-motor disconnect clutch constructed in accordance with at least one embodiment of the present invention;
Figure 12 is a schematic diagram illustrating an e-motor disconnect/pass through clutch assembly;
Figure 13 is a graph of radial distance versus axial distance and showing magnetic field lines due to a permanent magnet of a linear motor superimposed on the graph;
Figure 14a is a graph of sheer force density versus axial distance and showing sheer stress at a mid-air gap due to the permanent magnet;
Figure 14b is a schematic diagram of the magnetic sources of the linear motor;
Figure 15a is a graph of rotor or translator force (i.e. latching force) due to the permanent magnet versus rotor or actuator position;
Figure 15b is a schematic sectional view of the stator and the rotor of the linear motor;
Figure 16 is a graph similar to the graph of Figure 13 due to both the permanent magnet and coil currents in the electromagnetic source;
Figure 17a is a graph similar to the graph of Figure 14a due to both the permanent magnet and coil currents;
Figure 17b is a schematic view similar to the schematic view of Figure 14b;
Figure 18 is a graph similar to the graph of Figure 16 but with reversed coil currents;
Figure 19a is a graph similar to the graph of Figure 17a with the reversed coil currents; and
Figure 19b is a view similar to the view of Figures 14b and 17b.

### DESCRIPTION OF EXAMPLE EMBODIMENTS

As required, detailed embodiment of the present invention is disclosed herein; however, it is to be understood that the disclosed embodiment is merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

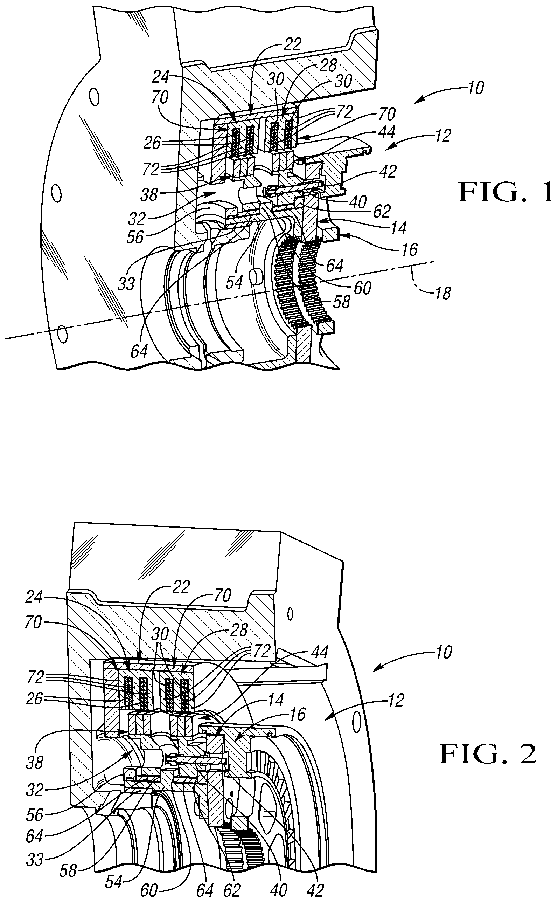

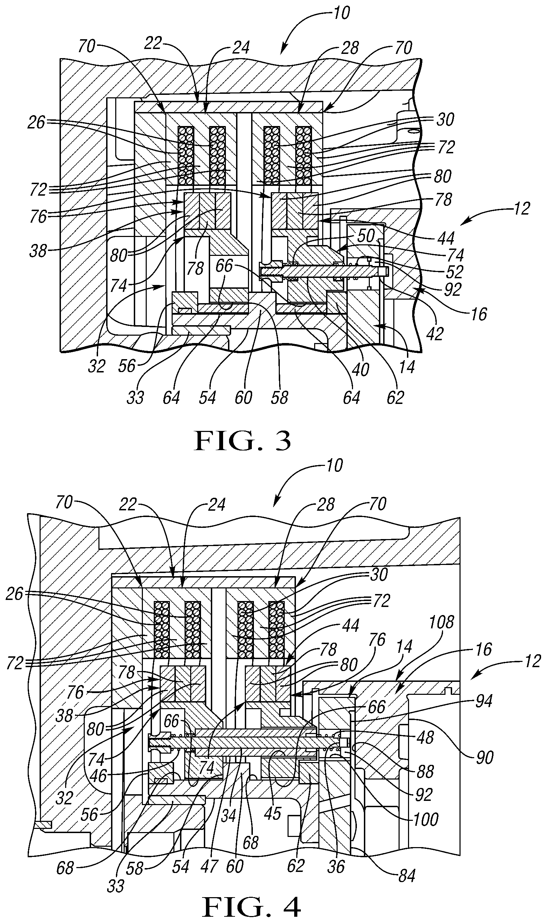

Referring now to Figures 1-4, which are not part of the invention, there is illustrated an electromechanical assembly, generally indicated at 10, to control the operating mode of a coupling apparatus, generally indicated at 12, having drive and driven members 14 and 16, respectively, supported for rotation relative to one another about a common rotational axis 18. The drive member 14 may be a pocket plate and the driven member 16 may be a notch plate. The coupling apparatus or assembly 12 includes at least one (preferably two) forward strut 20 and at least one (preferably two) reverse strut 20 for selectively mechanically coupling the members 14 and 16 together and change the operating mode of the assembly 12. Preferably, the struts 20 are spaced at 90° intervals about the axis 18.

The assembly 10 includes a first subassembly 22 including a first stator 24 having at least one (preferably two) electromagnetically inductive first coil 26 to create a first magnetic flux when at least one first coil 26 is energized. The subassembly 22 may also include a second stator 28 having at least one (preferably two) electromagnetically inductive second coil 30 to create a second magnetic flux when the at least one second coil 30 is energized.

The assembly 10 also includes a second subassembly 32 adapted for coupling with one of the members 14 or 16 (preferably the member 14) of the coupling apparatus 12 to rotate therewith. The second subassembly 32 is supported for rotation relative to the first subassembly 22 by a bushing 33 about the rotational axis 18 when coupled to the coupling apparatus 12. The second subassembly 32 includes at least one (preferably two) bi-directionally movable first rod 34. Each first rod 34 has a free end 36 adapted for connection to a forward strut 20 of the coupling apparatus 12 for selective, small displacement forward strut movement.

The second subassembly 32 also includes a first actuator 38 operatively connected to the at least one first rod 34 for selective bi-directional shifting movement along the rotational axis 18 between a first position of the first actuator 38 which corresponds to a first mode of the coupling apparatus 12 and a second position of the first actuator 38 which corresponds to a second mode of the coupling apparatus 12. When two first rods 34 are provided, the first rods are spaced 180° apart from one another. The first and second modes may be locked and unlocked (*i*.*e*. free wheeling) modes.

A first magnetic control force is applied to the first actuator 38 when the at least one first coil 26 is energized to cause the first actuator 38 to move between its first and second positions along the rotational axis 18.

The second subassembly 32 further includes at least one (preferably two) bi-directionally movable second rod 40. Each second rod 40 has a free end 42 adapted for connection to a reverse strut 20 of the coupling apparatus 12 for selective, small displacement reverse strut movement. The second subassembly 32 also includes a second actuator 44 operatively connected with the at least one second rod 40 for bi-directional shifting movement thereof along the rotational axis 18 between a first position of the second actuator 44 which corresponds to a third mode of the coupling apparatus 12 and a second position of the second actuator 44 which corresponds to a fourth mode of the coupling apparatus 12. When two second rods 40 are provided, the second rods are spaced 180° apart from each other but 90° apart from the first rods 34. The third and fourth modes may be locked and unlocked (*i*.*e*. free wheeling) modes.

A second control magnetic force is applied to the second actuator 44 when the at least one second coil 30 is energized to cause the second actuator 44 to move between its first and second positions along the rotational axis 18.

The second subassembly 32 includes a first pair of spaced biasing springs or members 46 and 48 for exerting corresponding biasing forces on the first actuator 38 in opposite directions along the rotational axis 18 when the first actuator 38 moves between its first and second positions along the rotational axis 18. Each face of each actuator 38 or 44 has clearance holes and spring pockets for the connecting rods 34 and 40, respectively, and their respective springs. When the actuators 38 and 44 move they push/pull their respective springs trapped between their faces and the ends of their corresponding rods 34 and 40.

The second subassembly 32 also includes a second pair of spaced biasing springs or members 50 and 52 for exerting corresponding biasing forces on the second actuator 44 in opposite directions along the rotational axis 18 when the second actuator 44 moves between its first and second positions along the rotational axis 18. Axial movement of the actuators 38 and 44 puts a biasing load onto the struts 20 via the springs 46, 48, 50 and 52 to either engage or disengage the struts 20. By reversing the current direction in the stators 24 and 28 their corresponding actuator 38 or 44 is moved back and forth from "off' to "on."

The second subassembly 32 includes a hub 54 adapted for coupling with the one of the members 14 and 16 (preferably the member 14) of the coupling apparatus 12. The hub 54 is supported for rotation relative to the first subassembly 22 by the bushing 33 about the rotational axis 18. The hub 54 slidably supports the first and second actuators 38 and 44, respectively, during corresponding shifting movement along the rotational axis 18.

The second subassembly 32 includes a first pair of spaced stops 56 and 58 supported on the hub 54 to define the first and second positions of the first actuator 38. The second subassembly 32 also includes a second pair of spaced stops 60 and 62 supported on the hub 54 to define the first and second positions of the second actuator 44.

The second subassembly 32 also includes a set of spaced guide pins 64 sandwiched between inner surfaces 66 of the first and second actuators 38 and 44, respectively, and an outer surface 68 of the hub 54 and extending along the rotational axis 18. The inner surfaces 66 and the outer surface 68 have V-shaped grooves or notches formed therein to hold the guide pins 64. The actuators 38 and 44 slide on the guide pins 64 during shifting movement of the actuators 38 and 44 along the rotational axis 18. The guide pins 64 pilot the actuators 38 and 44 on the hub 54. The hub 54 also distributes oil to the guide pins 64.

Each of the stators 24 and 28 includes a ferromagnetic housing 70 having spaced apart fingers 72 and an electromagnetically inductive coil 26 or 30 housed between adjacent fingers 72.

Each of the actuators 38 and 44 includes an annular inner part 74 and an annular outer part 76 connected thereto and having a magnetic annular ring 78 sandwiched between a pair of ferromagnetic backing rings 80. The magnetic control forces magnetically bias the fingers 72 and their corresponding backing rings 80 into alignment upon coil energization. These forces latch their respective actuator 38 or 40 in the "on" and "off positions. The rings 78 and 80 are acted upon by their respective stators 24 and 28 to move their respective actuators 38 and 40.

The second actuator 44 has at least one (preferably two) aperture 45 extending completely therethrough to allow each first rod 34 to move bi-directionally therethrough. A hollow cylindrical bushing 47 slidably supports each first rod 34 in the at least one aperture 45 during bi-directional shifting movement thereof.

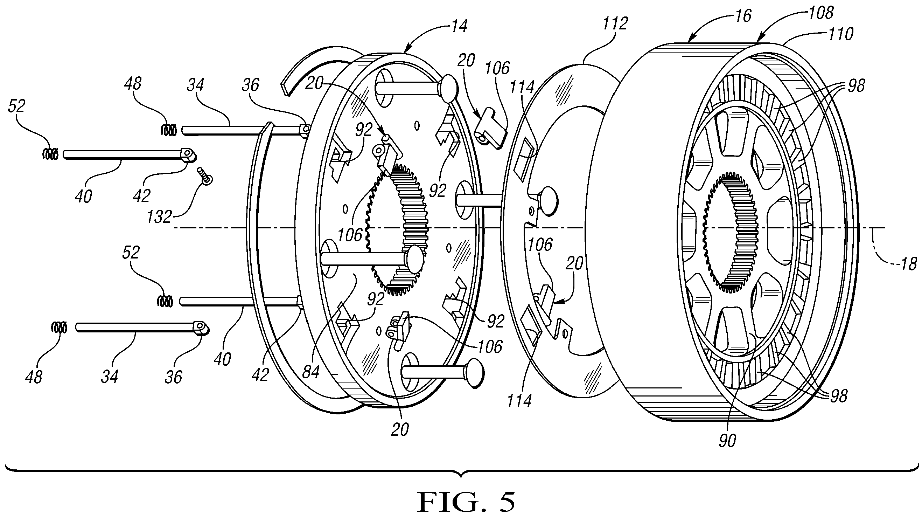

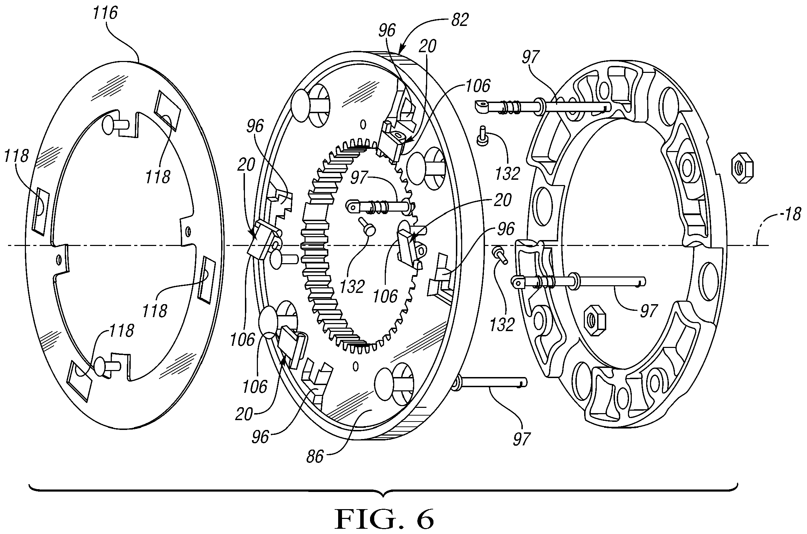

Referring now to Figures 5 and 6, the coupling assembly or apparatus 12 comprises a controllable clutch assembly including first and second clutch subassemblies. The assembly 12 includes the drive or first clutch member 14, the driven or second clutch member 16 and a third or drive clutch member 82 all supported for rotation relative to one another about the common rotational axis 18. The first clutch member 14 has a coupling first face 84 oriented to face axially in a first direction along the rotational axis 18. The third clutch member 82 has a coupling third face 86 oriented to face axially in a second direction along the rotational axis 18. The second clutch member 16 has a coupling second face 88 opposed to the first face 84 and oriented to face axially in the second direction along the rotational axis 18. The second clutch member 16 also has a coupling fourth face 90 opposed to the third face 86 and oriented to face axially in the first direction along the rotational axis 18.

The first face 84 has a first set of pockets 92 spaced about the rotational axis 18. Each pocket 92 of the first set has a strut 20 of a first set of struts 20 received thereby.

The second face 88 has a first set of locking formations 94 that are engaged by the struts 20 upon projecting outwardly from the first set of pockets 92 to prevent relative rotation of the first and second clutch members 14 and 16 with respect to each other in at least one direction about the axis 18.

The third face 86 has a second set of pockets 96 spaced about the rotational axis 18. Each pocket 96 of the second set has a strut 20 of a second set of struts 20 received thereby. Each strut 20 contained within the second set of pockets 96 is connected or coupled to its respective rod 97 of a second electromechanical assembly substantially identical in structure and operation to the first electromechanical assembly. Consequently, other than the rods 97, the second electromechanical assembly is neither shown nor described.

The fourth face 90 has a second set of locking formations 98 that are engaged by the second set of struts 20 upon projecting outwardly from the second set of pockets 96 to prevent relative rotation of the second and third clutch members 16 and 82 with respect to each other in at least one direction about the axis 18. The first and second clutch members 14 and 16, respectively, form the first clutch subassembly and the second and third clutch members 16 and 82, respectively, form the second clutch subassembly.

The first clutch member 14 has a first set of passages 100 spaced about the rotational axis 18 and in communication with their respective pockets 92 of the first set of pockets 92 to communicate an actuating force (preferably by the rods 34 and 40) to their respective strut 20 within its respective pocket 92 so that its respective strut 20 moves into contact with the first set of locking formations 94 to couple the first and second clutch members 14 and 16, respectively, for rotation with each other in at least one direction about the axis 18.

The third clutch member 82 has a second set of passages (not shown) spaced about the rotational axis 18 and in communication with their respective pockets 96 of the second set of pockets 96 to communicate an actuating force (preferably by the driven rods 97 as previously described) to their respective strut 20 within its respective pockets 96 so that its respective strut 20 moves into contact with the second set of locking formations 98 to couple the second and third clutch members 16 and 82, respectively, for rotation with each other in at least one direction about the axis 18.

Each strut 20 of the first and second sets of struts 20 has an end 106 that is pivotally movable outwardly of its respective pocket 92 or 96.

The second clutch member 16 includes a housing 108 having an end wall 110 for housing the first and third clutch members 14 and 82, respectively.

Each of the subassemblies is independently controllable.

The first set of struts 20 includes at least one reverse strut 20 and at least one forward strut 20. A first element 112 is supported between the first and second clutch members 14 and 16, respectively. The first element 112 has at least one opening 114 extending completely therethrough to allow the forward and reverse struts 20 of the first set to extend therethrough and lock the first and second clutch members 14 and 16, respectively, together to prevent relative rotation between the first and second clutch members 14 and 16, respectively, in either direction about the axis 18.

The second set of struts 20 includes at least one reverse strut 20 and at least one forward strut 20. A second element 116 is supported between the second and third clutch members 16 and 82. The second element 116 has at least one opening 118 extending completely therethrough to allow the forward and reverse struts 20 of the second set to extend therethrough and lock the second and third clutch members 16 and 82, respectively, together to prevent relative rotation between the second and third clutch members 16 and 82, respectively, in either direction about the axis 18.

The first, second, third and fourth faces 84, 88, 86 and 90, respectively, are generally flat and face generally axially. The first, second, third and fourth faces 84, 88, 86 and 90, respectively, are generally annular and extend generally radially with respect to the rotational axis.

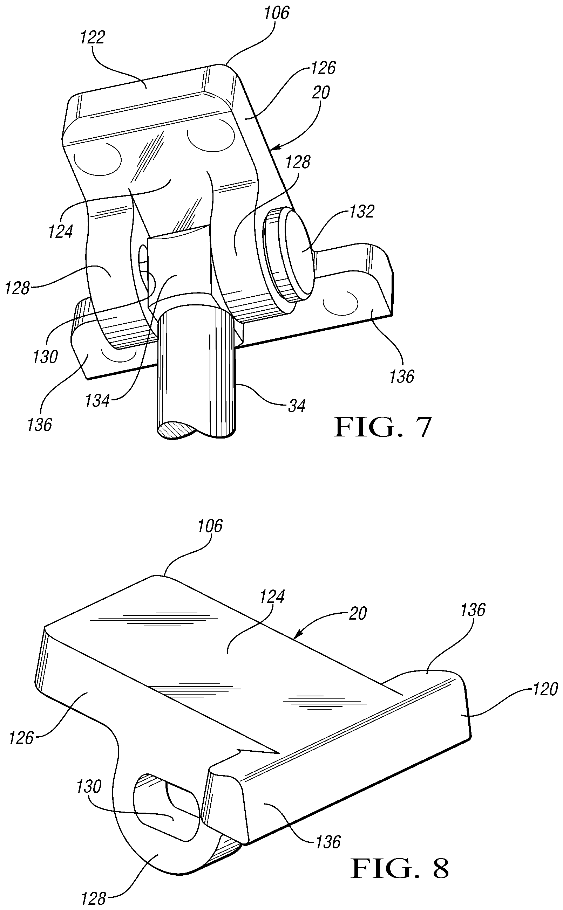

Referring now to Figures 7 and 8, there is illustrated one of the clevis-shaped struts 20 for the planar one-way clutch or apparatus 12. Each strut 20 comprises a member-engaging canted first end surface 120 and a member-engaging canted second end surface 122 diametrically opposite the first end surface 120. Each strut 20 also includes a main body portion 124 between the end surfaces 120 and 122. The main body portion includes a pair of spaced-apart side surfaces 126. Each strut 20 further includes a pair of spaced-apart, projecting leg portions 128. Each of the leg portions 128 extend from the main body portion 124 proximate one of the side surfaces 126. Each leg portion 128 has an aperture 130 adapted to receive a pivot pin 132 between the leg portions 128 to allow rotational movement of the strut 20 in responses to reciprocating movement of the rods 34, 40 or 97. A free end 134 of the rod 34, 40 or 97 is adapted to be coupled to the strut 20 via the pivot pin 132.

Each of the apertures 130 is preferably an oblong aperture 130 to receive the pivot pin 132 to allow both rotational and translational movement of the strut 20 in response to reciprocating movement of the rod 34, 40 or 97. Each strut 20 also includes a pair of oppositely projecting canted ears 136 which extend laterally from the main body portion 124 proximate the first end surface 120. Each strut 20 is preferably an injection molded strut such as a metal injection molded strut.

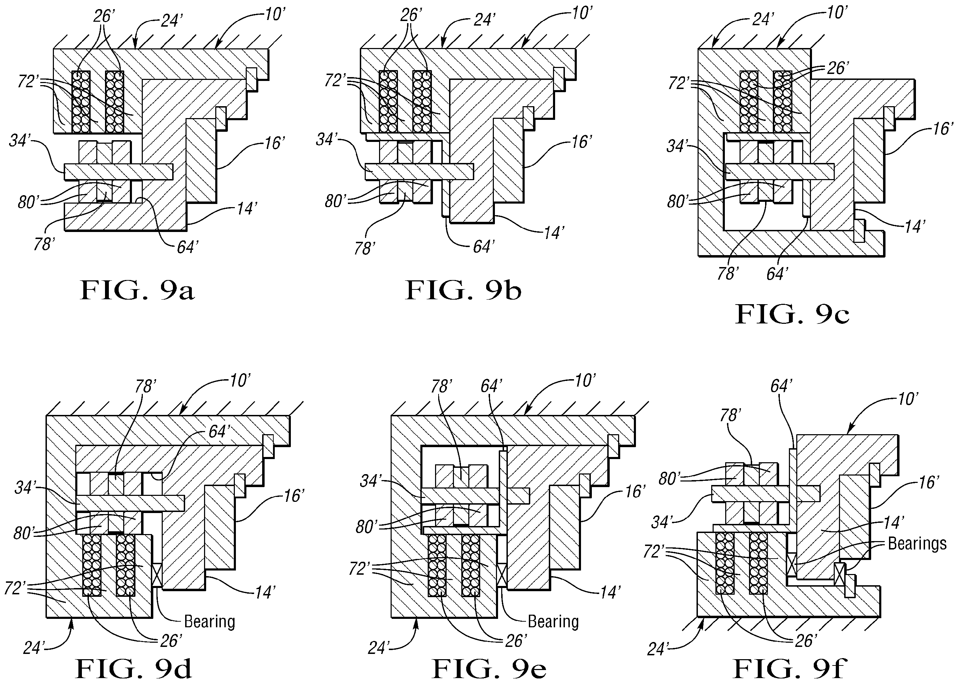

Referring now to Figures 9a-9f there are illustrated various unitized, dynamic linear motor concepts with one-way clutches and constructed in accordance with at least one embodiment of the present invention. In general, the clutches are magnetically latched. The clutches may be rocker, MD (mechanical diode), pawl, roller, sprag or any mechanical clutching device. The parts of Figures 1-8 which are the same or similar in structure and/or function to the parts shown in Figures 9c-9f have the same reference number but a single prime designation. Some parts are eliminated for simplicity.

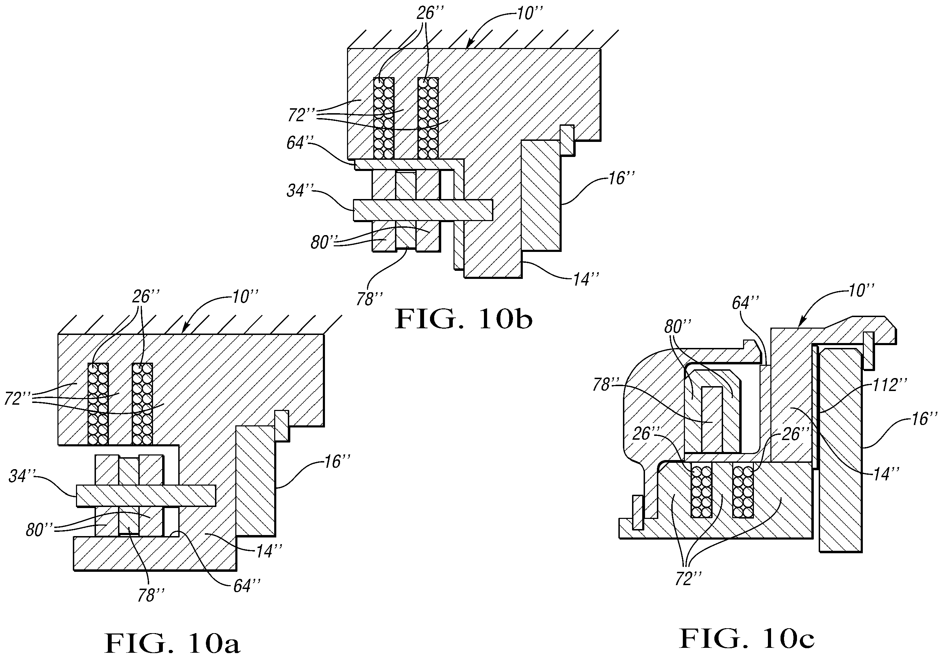

In like fashion, Figures 10a-10c illustrate various unitized static linear motor concepts with one-way clutches constructed in accordance with at least one embodiment of the present invention. The parts of Figures 10a-10c which are the same or similar in structure or function to the parts of Figures 1-8 and 9a-9f have the same reference number but a double prime designation. Some parts are eliminated for simplicity.

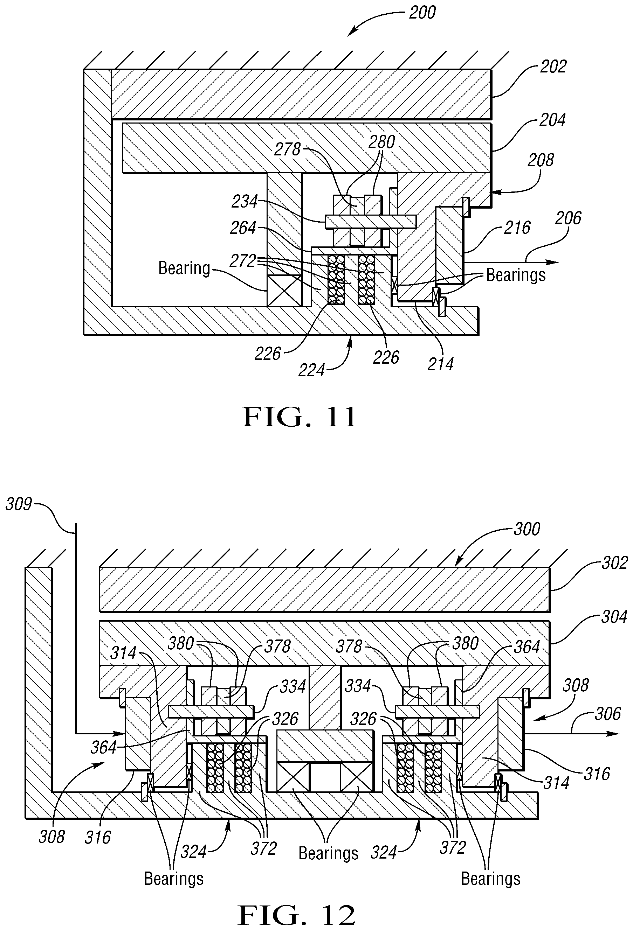

Figure 11 illustrates an electric motor disconnect clutch assembly, generally indicated at 200. The assembly 200 includes a motor stator 202, a motor rotor 204, a rotary output shaft 206 and an overrunning coupling and contral subassembly, generally indicated at 208, and constructed generally in accordance with the previously described overrunning coupling and control assemblies. Consequently, parts of the subassembly 208 which are the same or similar in structure and/or function to the parts shown in the prior Figures have the same reference number but are prefaced by the number "2." In other words "200" has been added to the prior reference number.

Figure 12 illustrates an electric motor disconnect/pass through assembly, generally indicated at 300, somewhat similar to the assembly 200 of Figure 11 but also including a rotary input shaft 309 and a pair of previously described overrunning and control assemblies, generally indicated at 308. The assembly 300 also includes a motor stator 302, a motor rotor 304 and a rotary output shaft 306. Parts of each subassembly 308 which are the same or similar in structure and/or function to the parts shown in prior Figures 1-10 have the same reference number but are prefaced by the number "3." In other words "300" has been added to the prior reference number.

### Axial Translation Latching Force in the Permanent Magnet (PM) Linear Motor

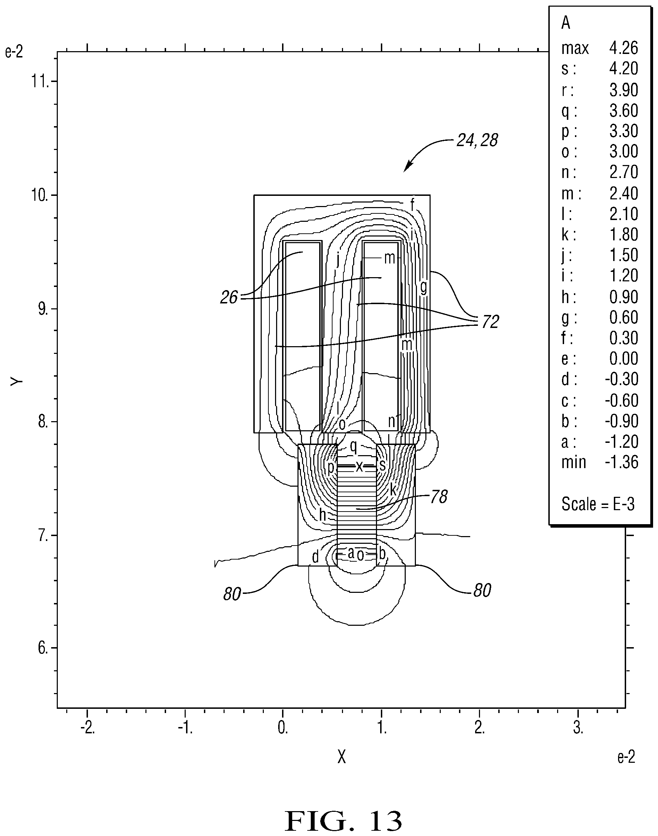

Consider the magnetic field line plot, also referred to as a magnetic flux line plot, shown in the cross sectional view of the subject linear motor structure, in Figure 13. This is a circularly symmetric machine structure, with the translator axial movement direction shown in the x-direction, and the radial direction shown in the y-direction. The stator 24,28 cross section is a three iron tooth 72, two slot/coil 26 structure with the slot openings facing, across a radial air gap, the moving element or translator. The translator structure includes a single, axially-magnetized, rare earth PM ring 78 sandwiched between two iron field redirection rings 80. The sizing of the various components can be estimated from the scaling, given in meters, on the x and y axes. The magnetic field lines have been determined by a commercial magnetic finite element analysis (MFEA) software package. The solution shown in Figure 13 is for the case of no coil current in the stator windings, and a translator axial position somewhat past, to the right of, the "neutral" or center position. The magnetic field lines, due to the translator magnet ring 78 alone, are seen to "flow" in closed paths with the majority of the lines flowing in a stator iron - air gap - translator iron/magnet circular path.

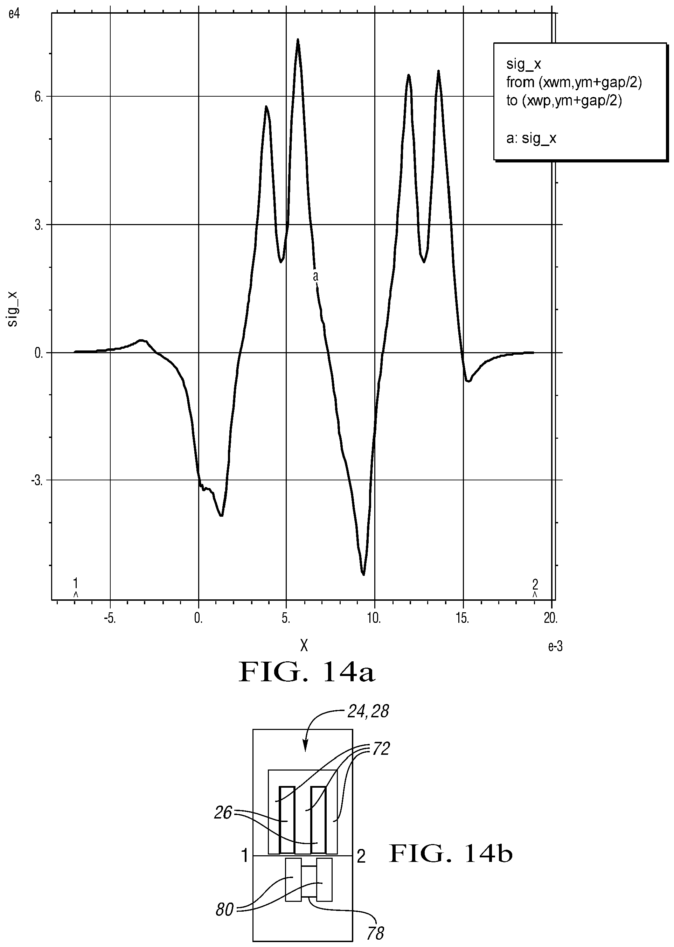

In general, the lines of force are confined to paths with a majority of iron content due to the ease of field production within the iron material. Examining the field lines that cross the air gap between the stator and the translator, a majority of them follow a path, from the translator iron redirection rings, up and to the right, to the iron teeth members in the stator. Thinking of the field lines as stretched rubber bands one would then expect a net force pulling the entire translator to the right. The actual sheer force density or x-directed sheer stress, again determined from MFEA analysis, at the axial directed mid air gap line for this case is given in Figure 14a. Shearing stress to both the right and the left is seen in Figure 14a, which can be matched to the distribution of air gap field lines which "lean" to both the right and left along the air gap, but the total force (the integrated shear over the air gap x-directed extent) shows a net force on the translator to the right, for this particular translator position.

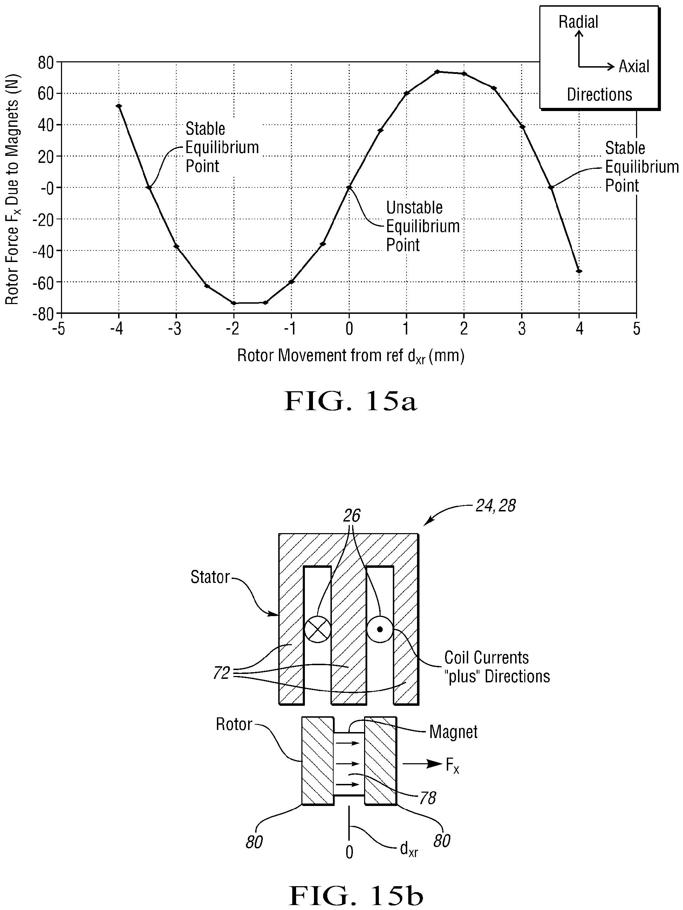

If one "sweeps" the translator position from left to right and recalculates the field lines at each position one can obtain a "slide show" of the magnetic field line production due to the translator magnet ring as a function of translator position. When the translator structure is located to the left of the center or neutral position, the majority of the flux lines flow radially up and to the left of the translator position, so we expect a left directed force on the translator body. Conversely, as also shown in Figure 13, when the translator structure is located to the right of the center position, the majority of flux line flow is radially up and to the right, so a right directed force on the translator body is expected. A plot of the actual total axial force on the translator body as a function of axial position, given in Newtons, is shown in Figure 15a. If the translator is positioned to the right of center, it is pushed, due to its own magnetic field, to the right, and if positioned to the left of center, it is pushed further to the left. This is referred to as the "latching" action of the assembly. The exact center position, where the left-right pushing force exactly balances to zero, is an unstable equilibrium point, at which even minute movements will result in forces tending to push the translator away from the center position. The two other points shown, near the two axial ends of the stator structure, where the net translational force also passes through a zero value, are stable equilibrium points, where minute movements result in position restoring force production.

### Axial Translation Force in the Permanent Magnet Linear Motor for the Case of Coil Current

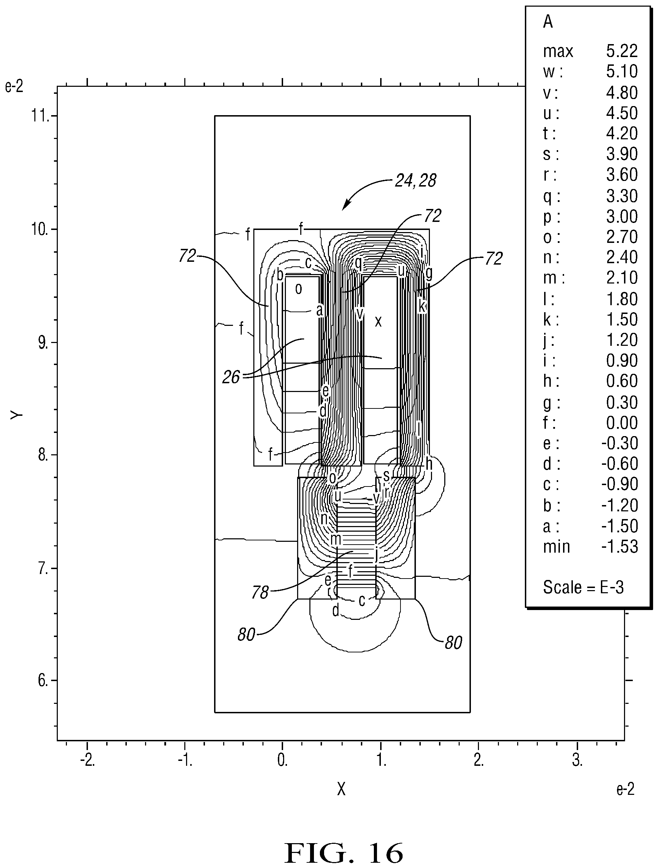

Consider the same machine structure as given in Figure 13 but with the addition of steady electrical current in the two stator windings. The solution for the magnetic field lines for this situation is shown in Figure 16. A steady current, assumed uniformly distributed in the winding cross sections, is assumed to flow out of the page, toward the viewer in the wires of the coil in the slot on right side of the stator. The axial magnetization direction of the ring magnet did not matter in the pure latching force situation of Figure 13 but it matters very much in this case of "dual" magnetic excitation. For the case shown, the magnet axial magnetization is stipulated to be to the right, in the plus x-direction, and therefore the direction or polarity of the magnetic lines of force closed "flow" path, due to the magnet alone, would be a counter clockwise circulation. The polarity direction of the circulating magnetic lines of force due to an electric current is given by the "right hand rule." If the thumb of one's right hand is made to point in the direction of the current flow in a wire, or a coil of wires, with the fingers encircling the cross section of the wire or the coil, the magnetic field lines or flux lines also encircle the wire or coil cross section and have a circulating direction in the same direction as the curling fingers.

In Figure 16 the magnetic lines due the current in the left side coil alone then encircle this coil in the counter clockwise direction, while the magnetic lines due to the current in the right side coil encircle this coil in the clockwise direction. The net or total production of magnetic field lines, as shown in Figure 16 is due to all three magnetic sources, the current in both coils and the translator magnet, so obviously there are regions in the machine structure where the individual sources of magnetic excitation enforce and add with each other and there are regions in the machine structure where the individual sources of magnetic excitation buck or subtract from each other. Since the coil current is reversible (plus or minus) the dual source enforcement and bucking regions within the machine structure, and, most importantly, within the machine air gap, can be moved with respect to each other. This is the basis of the controllable/reversible direction linear motor disclosed herein.

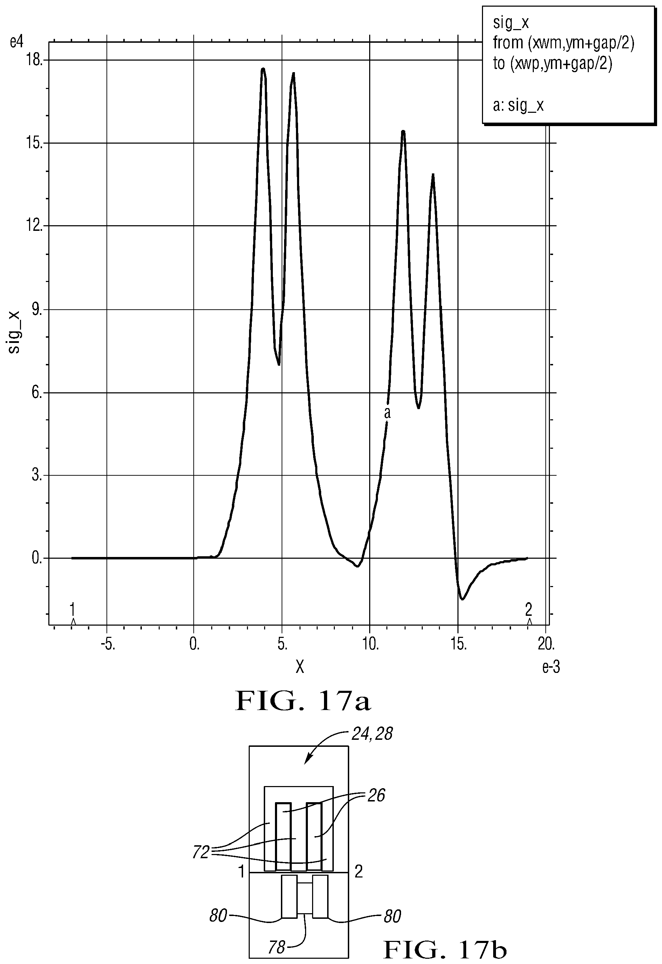

The flow of the majority of the flux lines produced by the translator magnet alone resulted in a net force on the translator to the right for the given translator position shown in Figure 13. But for the same translator position, with the addition of the coil currents, for the case shown in Figure 16, the flow of the majority of the flux lines has shifted to a net encirclement of the left hand coil and the translator structure. So the majority of the flux lines now cross the air gap up and to the left with respect to the case confirms this and is shown in the plot of Figure 17a. If the translator, by means of a "stop" was, previous to the introduction to translator magnet, introduction of coil current as in Figure 16 would then overpower the latching force to the right and produce a net motoring force to the left, inducing the translator into left-directed motion. If the translator does move and subsequently crosses over the center or neutral position, the motoring or switching current can even then be removed, as the now left-directed latching force, due to the magnet alone, will enforce the remaining left movement to a similar off-state latching position to the left of the center or neutral position. The net axial separation between the two latched positions on the left and right of the center position is then said to be the "stroke" length of the machine.

A slide show set of solutions for the total magnetic field lines within the linear motor structure with the same coil current drive as in the case shown in Figure 16, as a function of the axial position of the translator, similar to that given for the previous case of magnet excitation alone, show that for the level of coil current assumed the net force on the translator structure is always to the left, no matter the assumed value of the translator position.

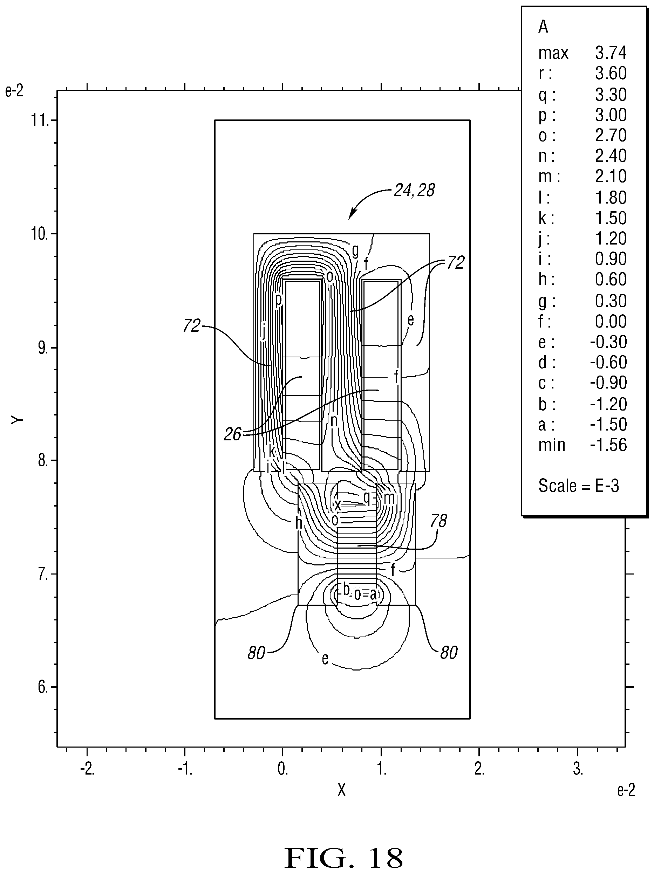

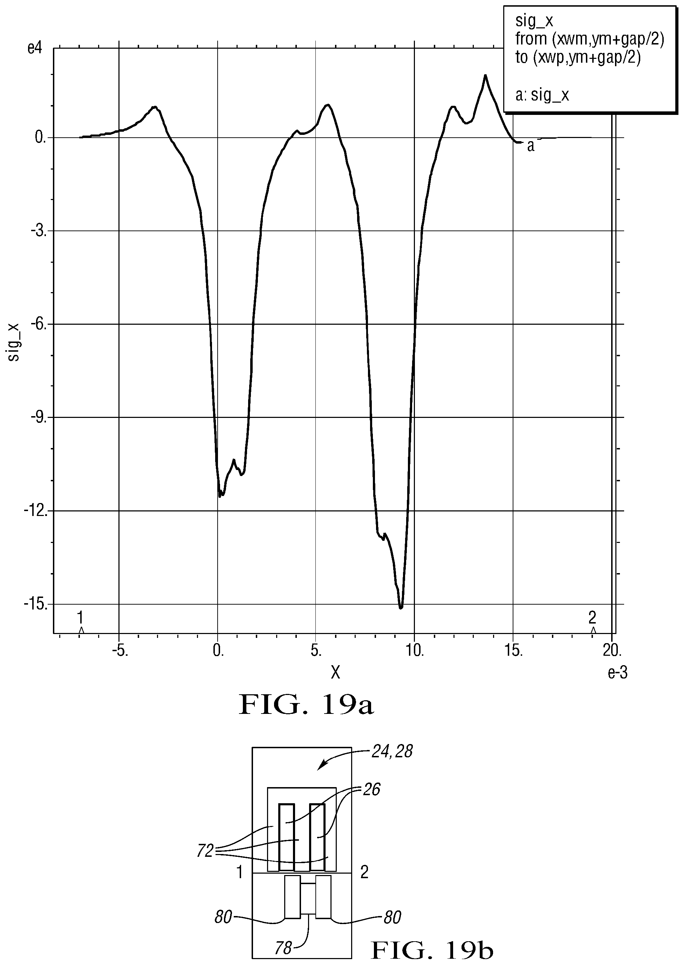

Finally, the magnetic field and axial sheer stress solutions for the case of coil current aiding drive, that is drive in the direction of the magnet latching force, are given in Figures 18 and 19a, respectively. The polarity of the coil currents for the case of Figures 18 and 19a are simply reversed from that of the case shown in Figures 16 and 17a, the translator position is the same as in the case of Figures 16 and 17a. In this case, coil current drives in the direction of the magnet latching force, when the translator position has moved to the left of the center position.

## Claims

1. A switchable linear actuator device (10) to control the operating mode of a coupling assembly (12), the device having a plurality of magnetic sources (26, 30, 78) which produce corresponding magnetic fields to create a net translational force, the device including:
a stator structure (24, 28) including at least one electromagnetic source (26, 30); and
a translator structure (38, 44) including a permanent magnet source (78) magnetically coupled to the stator structure across a radial air gap and supported for translational movement relative to the stator structure along an axis (18) between first and second stable axial end positions which correspond to first and second operating modes of the coupling assembly:
the permanent magnet source having an unstable axial equilibrium position between the end positions and wherein the translator structure translates along the axis between the different positions upon experiencing the net translational force comprising a first translation force caused by energization of the at least one electromagnetic source and a latching force based upon linear position of the permanent magnet source along the axis; **characterised by**:
a guide member (64', 64", 264, 364) disposed in the radial air gap configured to guide the movement.

2. The device as claimed in claim 1, wherein the structures (24, 28, 38, 44) are substantially circularly symmetric.

3. The device as claimed in claim 1, wherein the permanent magnet source (78) comprises an annular magnet.

4. The device as claimed in claim 3, wherein the annular magnet is a rare earth magnet.

5. The device as claimed in claim 3, wherein the annular magnet is axially magnetized.

6. The device as claimed in claim 3, wherein the translator structure (38, 44) includes a pair of field redirection rings (80) and wherein the annular magnet is sandwiched between the field redirection rings.

7. The device as claimed in claim 2, wherein each electromagnetic source includes an annular slot and a coil (26, 30) disposed in the slot, each slot opening to the radial air gap.

8. The device as claimed in claim 1, wherein the permanent magnetic source (78) has a permanent magnetic field and the at least one electromagnetic source includes a coil (26, 30) and wherein coil energization creates a temporary magnetic field which causes the translator structure (38, 44) to translate along the axis (18) and wherein the permanent magnetic field causes the translator structure to maintain at least one of the end positions without the need to maintain coil energization thereby providing a latching effect.

9. The device as claimed in any preceding claim, further comprising a connecting rod (34, 40), wherein the guide member (64', 64", 264, 364) is configured to also guide movement of the connecting rod.

## Patentansprüche

1. Schaltbare Linearaktuatorvorrichtung (10) zur Steuerung des Betriebsmodus einer Kupplungsanordnung (12), wobei die Vorrichtung eine Vielzahl von magnetischen Quellen (26, 30, 78) aufweist, die entsprechende magnetische Felder produzieren, um eine Nettotranslationskraft zu erzeugen, wobei die Vorrichtung Folgendes beinhaltet:
eine Statorstruktur (24, 28), die mindestens eine elektromagnetische Quelle (26, 30) beinhaltet; und
eine Umsetzerstruktur (38, 44), die eine Dauermagnetquelle (78) beinhaltet, die über einen radialen Luftspalt mit der Statorstruktur magnetisch verbunden und entlang einer Achse (18) zwischen ersten und zweiten stabilen axialen Endpositionen, die ersten und zweiten Betriebsmodi der Kupplungsanordnung entsprechen, für eine Translationsbewegung relativ zu der Statorstruktur abgestützt ist:
wobei die Dauermagnetquelle eine instabile axiale Gleichgewichtsposition zwischen den Endpositionen aufweist und wobei sich die Umsetzerstruktur entlang der Achse zwischen den verschiedenen Positionen umsetzt, wenn sie wahrnimmt, dass die Nettotranslationskraft eine erste Translationskraft umfasst, die durch Bestromung der mindestens einen elektromagnetischen Quelle verursacht wird, und eine Verriegelungskraft, basierend auf einer linearen Position der Dauermagnetquelle entlang der Achse; **gekennzeichnet durch**:
ein Führungselement (64', 64", 264, 364), angeordnet in dem radialen Luftspalt, dazu ausgelegt, die Bewegung zu führen.

2. Vorrichtung nach Anspruch 1, wobei die Strukturen (24, 28, 38, 44) im Wesentlichen kreisförmig symmetrisch sind.

3. Vorrichtung nach Anspruch 1, wobei die Dauermagnetquelle (78) einen runden Magneten umfasst.

4. Vorrichtung nach Anspruch 3, wobei der runde Magnet ein Seltenerdmagnet ist.

5. Vorrichtung nach Anspruch 3, wobei der runde Magnet axial magnetisiert ist.

6. Vorrichtung nach Anspruch 3, wobei die Umsetzerstruktur (38, 44) ein Paar von Feldumlenkungsringen (80) beinhaltet und wobei der runde Magnet zwischen den Feldumlenkungsringen sandwichartig positioniert ist.

7. Vorrichtung nach Anspruch 2, wobei jede elektromagnetische Quelle einen ringförmigen Schlitz und eine in dem Schlitz angeordnete Spule (26, 30) beinhaltet, wobei sich jeder Schlitz zu dem radialen Luftspalt öffnet.

8. Vorrichtung nach Anspruch 1, wobei die Dauermagnetquelle (78) ein Dauermagnetfeld aufweist und die mindestens eine elektromagnetische Quelle eine Spule (26, 30) beinhaltet und wobei Spulenbestromung ein zeitweiliges Magnetfeld erzeugt, das die Umsetzerstruktur (38, 44) veranlasst, sich entlang der Achse (18) umzusetzen, und wobei das Dauermagnetfeld die Umsetzerstruktur veranlasst, mindestens eine der Endpositionen beizubehalten, ohne dass es notwendig ist, eine Spulenbestromung beizubehalten, wobei ein Verriegelungseffekt bereitgestellt wird.

9. Vorrichtung nach einem der vorangehenden Ansprüche, ferner umfassend einen Verbindungsstab (34, 40), wobei das Führungselement (64', 64", 264, 364) dazu ausgelegt ist, auch eine Bewegung des Verbindungsstabes zu führen.

## Revendications

1. Dispositif à actionneur linéaire commutable (10) destiné à la commande du mode de fonctionnement d'un ensemble d'embrayage (12), le dispositif ayant une pluralité de sources magnétiques (26, 30, 78) qui produisent des champs magnétiques correspondants afin de créer une force de translation nette, le dispositif comprenant :
une structure statorique (24, 28) comprenant au moins une source électromagnétique (26, 30) ;
et
une structure de translation (38, 44) comportant une source à aimant permanent (78) couplée magnétiquement à la structure statorique à travers un entrefer principal et pouvant effectuer un mouvement de translation par rapport à la structure statorique sur un axe (18) entre des première et seconde positions de fin de course axiale stables qui correspondent à des premier et second modes de fonctionnement de l'ensemble d'embrayage :
la source à aimant permanent ayant une position d'équilibre axial instable entre les positions de fin de course et dans lequel la structure de translation effectue une translation sur l'axe entre les différentes positions lorsque la force de translation nette lui est appliquée comprenant une première force de translation provoquée par l'excitation de l'au moins une source électromagnétique et une force de verrouillage basée sur la position linéaire de la source à aimant permanent sur l'axe ; **caractérisé par** :
un élément de guidage (64', 64", 264, 364) disposé dans l'entrefer principal configuré pour guider le mouvement.

2. Dispositif selon la revendication 1, dans lequel les structures (24, 28, 38, 44) sont sensiblement symétriques de manière circulaire.

3. Dispositif selon la revendication 1, dans lequel la source à aimant permanent (78) comprend un aimant annulaire.

4. Dispositif selon la revendication 3, dans lequel l'aimant annulaire est un aimant aux terres rares.

5. Dispositif selon la revendication 3, dans lequel l'aimant annulaire est magnétisé axialement.

6. Dispositif selon la revendication 3, dans lequel la structure de translation (38, 44) comprend une paire d'anneaux de redirection de champ (80) et dans lequel l'aimant annulaire est inséré entre les anneaux de redirection de champ.

7. Dispositif selon la revendication 2, dans lequel chaque source électromagnétique comprend une fente annulaire et une bobine (26, 30) disposée dans la fente, chaque fente débouchant sur l'entrefer principal.

8. Dispositif selon la revendication 1, dans lequel la source à aimant permanent (78) a un champ magnétique permanent et l'au moins une source électromagnétique comprend une bobine (26, 30) et dans lequel l'excitation de la bobine crée un champ magnétique temporaire qui provoque la translation de la structure de translation (38, 44) sur l'axe (18) et dans lequel le champ magnétique permanent amène la structure de translation à maintenir au moins l'une des positions de fin de course sans qu'il soit nécessaire de maintenir l'excitation de la bobine, ce qui produit un effet de verrouillage.

9. Dispositif selon l'une quelconque des revendications précédentes, comprenant en outre une bielle (34, 40), dans lequel l'élément de guidage (64', 64", 264, 364) est configuré pour guider également le mouvement de la bielle.
